# EUROPÄISCHE PATENTANMELDUNG

(11) **EP 0 717 219 A1**
(43) Veröffentlichungstag der Anmeldung: **19.06.1996**
(21) Anmeldenummer: 95119274.9
(22) Anmeldetag: 07.12.1995
(51) Int. Cl.: F16K 31/06, F16K 1/42

(54) **Magnetventil**

(30) Priorität: 16.12.1994 DE 4444910
(71) Anmelder: Binder Magnete GmbH, D-78048 Villingen-Schwenningen (DE)
(72) Erfinder: Oesterle, Hans-Peter, D-78609 Tuningen (DE); Blaffert, Wolfgang, D-78628 Rottweil (DE); Schäfer, Heinz, D-78048 VS-Villingen (DE)
(74) Vertreter: Patentanwälte Westphal, Buchner, Mussgnug Neunert, Göhring

(57) **Zusammenfassung**

Das Magnetventil weist innerhalb eines Gehäuses (1) eine auf einen Spulenkörper (3) gewickelte Erregerspule (2) und einen bei Bestromung der Erregerspule entlang einer Mittenachse (X) axial verschiebbaren Anker (11) auf. Innerhalb des Magnetventiles ist ein Dichtelement (6) vorgesehen, das in Ruhestellung des Ankers gegen die Öffnung eines Ventilsitzes (8) drückt oder freigibt und bei Bestromung des Ankers diese Öffnung freigibt oder verschließt. Die Öffnung des Ventilsitzes weist erfindungsgemäß eine Umfangslänge auf, die im Vergleich zur Umfangslänge einer kreisförmigen Öffnung mit gleicher Öffnungsquerschnittsfläche vergrößert ist.
Vorteil: schnelleres Schließen und Öffnen des Magnetventiles.

## Beschreibung

Die Erfindung betrifft ein Magnetventil gemäß den Merkmalen des Oberbegriffs des Anspruchs 1.

Ein solches Magnetventil ist z.B. aus G 91 07 436.3 und G 93 17 864.6 bekannt. Das Magnetventil weist ein zylindrisches Gehäuse auf, in welchem eine Erregerspule auf einen Spulenkörper gewickelt und in einem Ankerraum des Spulenkörpers ein bei Bestromung der Erregerspule entlang einer Mittenachse axial verschiebbarer Anker angeordnet ist. Bei axialer Verschiebung des Ankers wird ein mit dem Ankerkolben verbundenes Dichtelement in einen Ventilsitz eines Ventilteils gedrückt bzw. der Ventilsitz freigegeben. Das Dichtelement ist mit dem Anker über einen Stößel feststehend in Verbindung und wird somit von diesem zwangsgeführt. Das Dichtelement wird durch die Kraft einer Druckfeder auf den Ventilsitz gepreßt. Wird die Erregerspule von Strom durchflossen, bildet sich eine Kraft entgegen der Federkraft aus, wodurch das Dichtelement den Ventilsitz freigibt. Das Magnetventil öffnet und ein gasförmiges oder flüssiges Medium kann durch das Magnetventil fließen.

Ähnliche Magnetventile sind in DE 34 04 189 C2 und DE 34 04 188 C2 beschrieben. Bei beiden Magnetventilen dient die kegelförmige Spitze des mit dem Anker verbundenen Stößels als Schließkörper, um den kreisförmigen Einlaßkanal abzudichten.

Derartige Magnetventile werden vorzugsweise als Schaltventile (Ein-Aus) verwendet.

Bei Verwendung als Proportionalventil zur Steuerung einer Durchflußmenge (Betrieb mit konstanter Taktfrequenz von einigen Hertz und Pulsbreitenmodulation) ergibt sich aufgrund des verhältnismäßig großen erforderlichen Ventilhubes ein ungünstigeres Steuerverhalten der Durchflußmenge. Solche Magnetventile werden in großem Umfang beispielsweise in der Automobiltechnik zur pneumatischen Druck- bzw. Unterdrucksteuerung eingesetzt.

Der Erfindung liegt die Aufgabe zugrunde, ein Proportionalventil anzugeben, das sich durch ein verbessertes Steuerverhalten der Durchflußmenge auszeichnet, d.h., sich im Vergleich zu den bekannten Magnetventilen schneller öffnen bzw. schließen läßt.

Diese Aufgabe wird durch ein Magnetventil mit den Merkmalen des Anspruchs 1 gelöst.

Weiterbildungen der Erfindung sind Gegenstand der Unteransprüche.

Die Erfindung geht von der Erkenntnis aus, daß für ein schnelles Öffnen bzw. Schließen des Ventilsitzes und damit des Magnetventiles neben einer optimalen Dimensionierung des Magnetkreises des Magnetventiles und einer kleinen zu bewegenden Masse, ein möglichst kleiner Hub der zu bewegenden Masse entscheidend ist. Die Erfindung sieht vor, die Öffnung des Ventilsitzes so zu gestalten, daß deren Umfangslänge im Vergleich zur Umfangslänge einer kreisförmigen Öffnung mit gleicher Öffnungsquerschnittsfläche vergrößert ist. Durch eine derartige Vergrößerung der Umfangsfläche der Öffnung des Ventilsitzes braucht das Dichtelement weniger weit von der Öffnung des Ventilsitzes wegbewegt werden, um ein staufreies Durchleiten des Durchflußmittels im Ventil gerade zu ermöglichen.

Obwohl grundsätzlich jede Öffnungsform des Ventilsitzes geeignet ist, die die erwähnte größere Umfangslänge im Vergleich zu einer kreisförmigen Öffnung aufweist, hat sich insbesondere eine kleeblattförmige bzw. rosettenförmige Gestaltung der Öffnung des Ventilsitzes als günstig erwiesen. Die erforderliche Hubhöhe, um die das Dichtelement vom Ventilsitz wegbewegt werden muß, damit ein staufreies Durchfließen des Durchfußmittels durch den Ventilsitz möglich ist, ist hierbei etwa um den Faktor zwei im Vergleich zu einer kreisförmigen Querschnittsfläche der Öffnung reduziert.

In einer Weiterbildung der Erfindung weist das Magnetventil eine Dichtlippe auf, die sich auf der Öffnung des Ventilsitzes entlang deren Umfangslänge erstreckt. Hierbei ist vorzugsweise der außerhalb der Dichtlippe liegende Bereich des Ventilsitzes in bezug auf das Dichtelemet zurückversetzt angeordnet. Durch dieses Hervorspringen der Dichtlippe im Ventilsitz werden an den Zuströmstellen für weiter im Zentrum liegende Dichtlippenabschnitte Strömungsengpässe ausgeschlossen.

Der Ventilsitz ist in einer Ausführungsform der Erfindung aus Kunststoff gebildet und einstückig an ein Deckelteil des Magnetventils angeformt. Hierdurch ergibt sich ein äußerst einfacher Aufbau des Magnetventiles.

Obwohl der Ventilsitz einstückig mit dem Deckelteil des Magnetventiles verbunden sein kann, ist es auch möglich, eine die erfindungsgemäße Öffnung enthaltende Düse vorzusehen. Diese Düse wird vorzugsweise aus Kunststoff gebildet. Darüber hinaus kann diese Düse sowohl in das Deckelteil als auch in den Polkern des Magnetventiles eingesetzt werden. Die erstgenannte Variante ist für eine NG-Ausführung (= normal geschlossen) und die zweitgenannte Variante für eine NO-Ausführung (= normal offen) des Magnetventiles geeignet.

Eine Weiterbildung der Erfindung sieht vor, daß der Anker mit Dichtelement von einer Blattfeder, die im Gehäuse oder Deckelteil des Magnetventiles fixiert ist, geführt wird. Bei NG-Ausführung des Magnetventiles ist hierbei die Blattfeder so vorgespannt, daß eine sichere Abdichtung zwischen Ventilsitz und Dichtelement im unbestromten Zustand gewährleistet ist.

Die Erfindung wird nachstehend anhand eines konkreten Ausführungsbeispieles im Zusammenhang mit verschiedenen möglichen Öffnungsquerschnittsflächen des Ventilsitzes bzw. der Düse erläutert. Es zeigen:
- Figur 1: ein beispielhaftes Magnetventil nach der Erfindung in Schnittdarstellung,
- Figur 2: ein Deckelteil des in Figur 1 dargestellten Magnetventiles mit Blick auf die Innenseite des Deckelteiles mit eingesetzter Düse,
- Figur 3: eine Schnittansicht des Deckelteiles mit Ventilsitz mit eingesetzter Düse,
- Figur 4: ein Ausführungsbeispiel einer im Ventilsitz sitzenden Düse mit erfindungsgemäßer Öffnung und Dichtungslippe,
- Figur 5: eine Schnittdarstellung zu Figur 4, und
- Figur 6: verschiedene Formen der Öffnungen des Ventilsitzes.

In den nachfolgenden Figuren bezeichnen, sofern nicht anders angegeben, gleiche Bezugszeichen gleiche Teile mit gleicher Bedeutung.

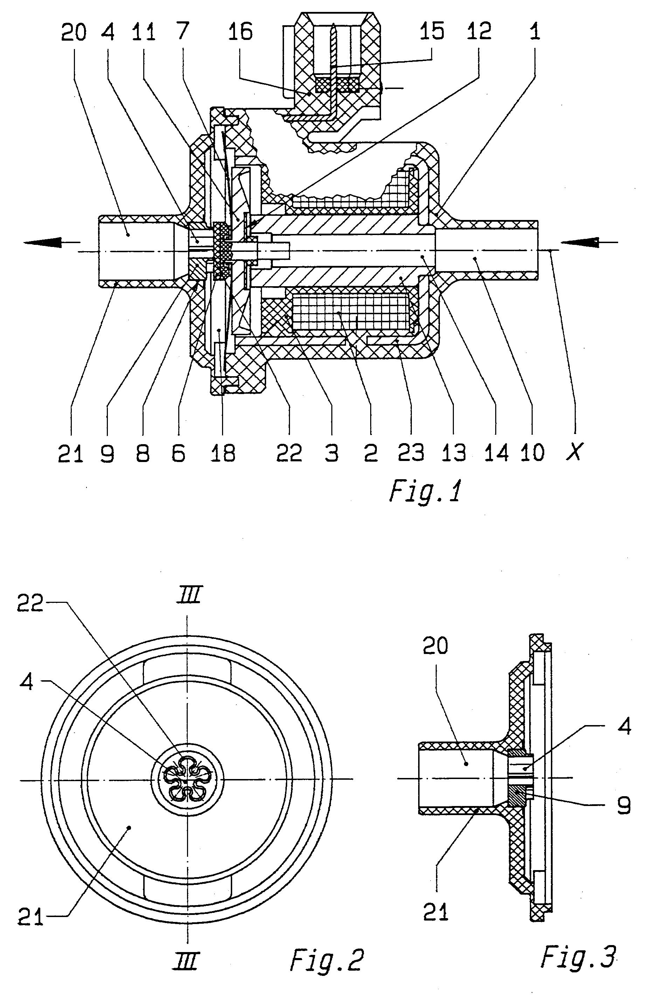

In Figur 1 ist ein Ausführungsbeispiel für ein Magnetventil nach der Erfindung dargestellt. Das etwa zylinderförmig gestaltete Gehäuse 1 verfügt über einen rohrförmigen Zulauf 10 und einen mit diesem Zulauf 10 in Verbindung stehenden Ablauf 20, durch welches ein flüssiges oder gasförmiges Durchflußmedium geleitet werden kann. Die Durchflußmenge wird durch das Öffnen und Schließen einer in einem Ventilsitz 8 angeordneten Öffnung 4 eingestellt. Das Öffnen und Schließen dieser Öffnung 4 des Ventilsitzes 8 erfolgt mit einem Dichtelement 6. Zur Durchflußmengensteuerung wird das Dichtelement 6 taktweise auf die Öffnung 4 des Ventilsitzes 8 gedrückt bzw. davon entfernt. Angewendet wird ein solches Magnetventil beispielsweise in der Automobiltechnik als Regenerierventil zur Rückführung der aus einem Tank strömenden Dämpfe in den Motorraum.

Im einzelnen ist das in Figur 1 dargestellte Magnetventil wie folgt aufgebaut. Innerhalb eines zylinderförmigen, magnetisierbaren, z.B. aus Stahl bestehenden, Bechers 23 ist ein rohrförmiger Polkern 13 angeordnet. Der rohrförmige Polkern 23 ist feststehend mit der in Figur 1 rechts liegenden stirnseitigen Wandung des magnetisierbaren Bechers 23 in Verbindung und koaxial zum metallischen Becher 23 angeordnet. Der rohrförmige Polkern 13 ist beispielsweise mit seinem einen Ende mit dem Boden des magnetisierbaren Bechers 23 vernietet. Der magnetisierbare Becher 23 weist hierfür eine geeignete Öffnung zur Aufnahme des rohrförmigen Polkerns 13 auf. Der Polkern 13 besteht ebenfalls aus metallischem Material. Von der offenen Seite des magnetisierbaren Bechers 23 her wird ein rohrförmiger Spulenkörper 3 mit aufgewickelter Erregerspule 2 in den Innenraum zwischen magnetisierbarem Becher 23 und Polkern 13 eingefügt. Die Erregerspule 2 ist mit zwei Anschlußfahnen 15 versehen, an welchen der Erregerstrom für das Magnetventil zuführbar ist. Die Anschlüsse 15 erstrecken sich im Ausführungsbeispiel von Figur 1 nach oben.

Nachdem der Spulenkörper 3 samt Erregerspule 2 zwischen Polkern 13 und magnetisierbare Becher 23 eingefügt ist, wird der magnetisierbare Becher 23 in einer geeigneten Spritzform mit Kunststoff umspritzt. Die spritzform ist hierbei so ausgestaltet, daß die Außenwandung des magnetisierbaren Bechers 23 vollständig von Kunststoff umgeben ist. Darüber hinaus wird auf das in Fig. 1 rechte Ende des magnetisierbaren Bechers 23 ein rohrförmiger Ansatz aus Kunststoff angespritzt, an den eine geeignete Rohrleitung angeschlossen werden kann, um das Durchflußmedium dem Magnetventil zuzuführen. In der Spritzform werden zugleich auch die Anschlüsse 15 mit einer Ummantelung 16 aus Kunststoff beabstandet umgeben, so daß die Anschlüsse 15 geschützt sind. Der rohrförmige Zulauf 10 ist zweckmäßigerweise koaxial zur Mittenachse X des Polkerns 13 bzw. des magnetisierbaren Bechers 23 angeordnet.

Die erwähnte Kunststoffumspritzung des magnetisierbaren Bechers 23 samt rohrförmigem Ansatz des Zulaufes 10 und Ummantelung 16 der Anschlüsse 15 dient als Gehäuse 1 des Magnetventiles.

Auf diesem Teil des Gehäuses 1 sitzt ein Deckelteil 21 auf, das in den Figuren 2 in Draufsicht mit Blick vom Polkern 13 her und in Figur 3 in Schnittdarstellung entlang der Schnittlinie III-III gezeigt ist. Das Deckelteil 21 sitzt auf dem beschriebenen Teil des Gehäuses 1, z.B. durch Ultraschallverschweißung, auf. Das Deckelteil 21, das vorzugsweise ebenfalls aus Kunststoff besteht, weist eine zur Mittenachse X konzentrisch liegende Öffnung auf, die als Ventilsitz 8 dient. Zusätzlich ist das Deckelteil 21 mit einem rohrförmigen Ansatz versehen, der als Ablauf 20 dient und ebenfalls konzentrisch zur Mittenachse X angeordnet ist. Der rohrförmige Ansatz des Deckelteiles 21 erstreckt sich von dem Magnetventil weg.

Innerhalb des Ventilsitzes 8 ist im Ausführungsbeispiel von Figur 1 eine Düse 9, die vorzugsweise ebenfalls aus Kunststoff besteht, angeordnet. Diese Düse 9 verfügt über eine Öffnung 4, die von einem Dichtelement 6 verschlossen werden kann. Die Düse 9 weist eine Öffnung 4 auf, wie sie aus Figur 2 in Draufsicht zu erkennen ist. Diese Öffnung 4 hat eine rosettenförmige Gestalt mit in diesem Ausführungsbeispiel fünf sich symmetrisch zur Mittenachse X wegerstreckenden Rosettenkeulen.

Obwohl in den Figuren 1 bis 3 eine Düse 9 dargestellt ist, die im Ventilsitz 8 des Deckelteiles 21 angeordnet ist, ist es jederzeit möglich, die Öffnung 4 als integralen Bestandteil des Deckelteiles 21 auszugestalten. Das Deckelteil 21 kann in einer geeigneten Spritzform so gestaltet werden, daß die rosettenförmige Öffnung 4 bereits im Deckelteil enthalten ist. Diese einstückige Ausbildung des Ventilsitzes 8 im Deckelteil 21 ist ebenso möglich wie das separate Vorsehen einer Düse, die im Deckelteil 21 des Magnetventiles eingesetzt wird.

Die rosettenförmige Öffnung 4 der Düse 9 bzw. des Ventilsitzes 8 ist an ihrer Dichtseite vorzugsweise mit einer Dichtlippe 22 versehen. Diese Dichtlippe 22 erstreckt sich entlang der Umfangslänge der Öffnung 4. An dieser Dichtlippe 22 liegt in der Schnittdarstellung von Figur 1 das vorzugsweise plattenförmig ausgestaltete Dichtelement 6, das aus Kunststoff bestehen kann, flächig an. Das plattenförmige Dichtelement 6 wird über eine geeignete Federeinrichtung, hier eine Blattfeder 7, in Ruhestellung des Magnetventiles, d.h. bei nicht bestromtem Zustand der Erregerspule 2, gegen die Dichtlippe 22 gedrückt. Damit ist die Öffnung 4 verschlossen. Die für das Drücken des Dichtelementes 6 auf die Dichtlippe 22 der Öffnung 4 verantwortliche Blattfeder 7 ist an ihren Enden im Gehäuse 1 des Magnetventiles fixiert. Die Blattfeder 7 ist bei NG-Ausführungen, wie in Fig. 1 dargestellt, vorgespannt und drückt das Dichtelement 6 gegen die Dichtlippe 22. Zwischen der Blattfeder 7 und dem Spulenkörper 3 des Magnetventiles befindet sich ein plattenförmiger Anker 11, der aus Metall besteht. Die Blattfeder 7 ist zwischen Anker 11 und Dichtelement 6 eingeklemmt. Der Anker 11 und der Polkern 13 sind so gestaltet, daß ein über den Zulauf 10 zugeführtes Durchflußmedium in den Ablauf 20 gelangen kann, wenn das Dichtelement 6 die Öffnung 4 freigibt.

Ein solches Freigeben der Öffnung 4 und damit eine Öffnung des Magnetventiles wird durch geeignete Bestromung der Erregerspule 2 erreicht. Bei geeigneter Bestromung der Erregerspule 2 baut sich ein magnetisches Feld innerhalb des Magnetventiles auf, wodurch der Anker 11 samt Ankerteil 17 angezogen und damit in der in Figur 1 dargestellten Stellung nach rechts bewegt wird. Da das Dichtelement 6 feststehend mit dem Anker 11 in Verbindung steht, wird bei Bestromung der Erregerspule 2 das Dichtelement 6 von der Öffnung 4 der Düse 9 wegbewegt. Die Öffnung 4 wird hierdurch freigegeben. Sobald die Bestromung der Erregerspule 2 unterbrochen wird, bricht das Magnetfeld innerhalb des Magnetventiles zusammen und der Anker 11 bewegt sich aufgrund der Federkraft der Blattfeder 7 wieder in seine Ruhestellung zurück. Hierdurch wird das Dichtelement 6 wieder auf die Öffnung 4 gedrückt und das Magnetventil geschlossen. Durch ein taktweises Bestromen der Erregerspule 2 mit unterschiedlichen Einschaltzeiten kann die vom Zulauf 10 zum Ablauf 20 fließende Durchflußmenge gesteuert werden.

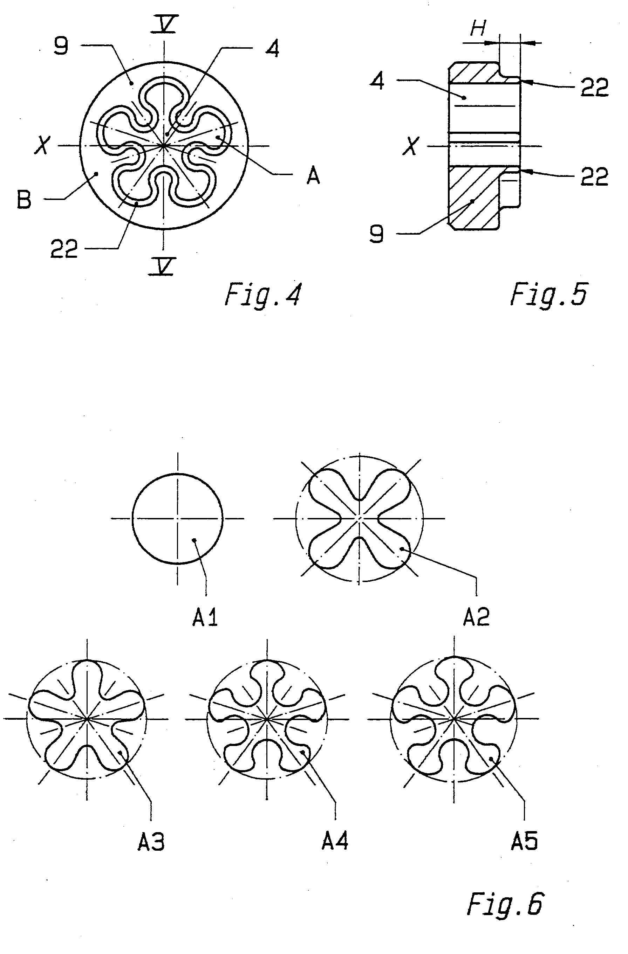

Aufgrund der rosettenartigen Gestaltung der Öffnung 4 ist die erforderliche Hubbewegung des Dichtelementes 6 im Vergleich zu kreisförmigen Öffnungen in Magnetventilen mit gleicher Öffnungsquerschnittsfläche erheblich reduziert. Ein schnelleres Öffnen und Schließen des Magnetventiles ist die Folge. Wie im Zusammenhang mit Figur 6 noch erläutert werden wird, sind beliebige Öffnungsformen nach der Erfindung möglich, sofern die Bedingung eingehalten wird, daß die Öffnung 4 eine Umfangslänge aufweist, die im Vergleich zur Umfangslänge einer kreisförmigen Öffnung mit gleicher Öffnungsquerschnittsfläche vergrößert ist. Wird diese Bedingung erfüllt, muß das Dichtelement 6 weniger weit von der Öffnung 4 wegbewegt werden, um ein staufreies Durchfließen des Durchflußmediums zu ermöglichen.

In Figur 4 ist die bereits diskutierte Düse 9 in Draufsicht auf ihre die Dichtlippe 22 enthaltende Seite dargestellt. Mit A ist die Öffnungsquerschnittsfläche der Öffnung 4 bezeichnet. Das Bezugszeichen B bezeichnet den außerhalb dieser Öffnungsquerschnittsfläche A liegenden Bereich B. Obwohl in Figur 4 die Düse 9 als ringförmiges Teil mit rosettenförmiger Öffnung 4 gezeigt ist, ist es, wie bereits erwähnt, auch möglich, diese Düse 9 einstückig mit dem Deckelteil 21 des Magnetventiles herzustellen.

In Figur 5 ist die in Figur 4 in Draufsicht dargestellte Düse 9 in Schnittdarstellung entlang der Schnittlinie V-V gezeigt. Wie deutlich zu erkennen, ist der Bereich B um eine Höhe H von der Dichtlippe 22 zurückversetzt. Die Höhe H ist dabei so dimensioniert, daß an den Zuströmstellen des Durchflußmediums für weiter zur Mittenachse X liegende Dichtlippenabschnitte keine Strömungsengpässe entstehen.

In Figur 6 sind verschiedene Öffnungsquerschnitte des Ventilsitzes 8 bzw. der Düse 9 dargestellt. Mit A1 ist eine kreisförmige Öffnungsquerschnittsfläche bezeichnet, wie sie bei den bisher bekannten Magnetventilen Verwendung fand. Mit A2, A3, A4 und A5 sind Öffnungsquerschnittsflächen bezeichnet, wie sie beispielsweise bei einem Magnetventil nach der Erfindung Verwendung finden können. Mit solchen Öffnungsquerschnittsflächen A2, A3, A4 und A5 der Öffnung 4 wird erreicht, daß das Dichtelement 9 im Vergleich zur kreisförmigen Öffnung weniger weit angehoben werden muß, um ein staufreies Durchfließen des Durchflußmediums zu erlauben.

Die in Figur 6 dargestellten Öffnungsquerschnittsflächen A1 - A5 sind in etwa gleich groß. Geht man davon aus, daß diese Öffnungsquerschnittsflächen A1 - A5 mit einem plattenförmigen Dichtelement abgedichtet werden, so muß dieses Dichtelement aufgrund der in etwa doppelten Umfangslänge der Öffnungen mit den Öffnungsquerschnittsflächen A2, A3, A4 und A5 nur etwa halb so weit angehoben werden, daß ein staufreies Durchfließen des Durchflußmediums möglich ist. Die kleeblattförmige Gestaltung der Öffnungsquerschnittsfläche A2 bzw. die rosettenförmigen Gestaltungen der Öffnungsquerschnittsflächen A3, A4 und A5 sind erfindungsgemäß nicht die einzig möglichen Öffnungsquerschnittsformen. Anstelle von vier oder fünf keulenförmigen Ausbuchtungen der Öffnung 4 können auch zwei, drei, sechs oder mehrere solcher Ausbuchtungen vorgesehen werden. Es hat sich darüber hinaus herausgestellt, daß bereits eine viereckförmige, insbesondere quadratische Gestaltung, der Öffnungsquerschnittsfläche eine Reduzierung des erforderlichen Hubes erlaubt.

Im Zusammenhang mit den Figuren wurden Magnetventile vorgestellt, die im nichtbestromten Zustand der Erregerspule 2 geschlosen sind, also sogenannte NG-Ausführungen. Bei diesen Magnetventilen sitzt die Düse 9 im Deckelteil 21 des Magnetventils (vgl. Fig. 1). Bei Magnetventilen in NO-Ausführung (normal offen) kann die Düse im Polkern 13 angeordnet werden. Die Blattfeder 7 ist dabei so anzuordnen, daß diese in Ruhestellung nicht vorgespannt wird.

### Bezugszeichenliste

- 1: Gehäuse
- 2: Erregerspule
- 3: Spulenkörper
- 4: Öffnung
- 6: Dichtelement
- 7: Blattfeder
- 8: Ventilsitz
- 9: Düse
- 10: Zulauf
- 11: Anker
- 12: Stahlscheibe
- 13: Polkern
- 14: Bohrung
- 15: Anschluß
- 16: Ummantelung
- 18: Ankerraum
- 20: Ablauf
- 21: Deckelteil
- 22: Dichtlippe
- 23: magnetisierbarer Becher
- X: Mittenachse
- H: Höhe
- A: Öffnungsquerschnittsfläche
- A1: erste Öffnungsquerschnittsfläche
- A2: zweite Öffnungsquerschnittsfläche
- A3: dritte Öffnungsquerschnittsfläche
- A4: vierte Öffnungsquerschnittsfläche
- A5: fünfte Öffnungsquerschnittsfläche
- B: Bereich
- III-III: Schnittlinie
- V-V: Schnittlinie

## Patentansprüche

1. Magnetventil mit einem Gehäuse (1), in welchem eine Erregerspule (2) auf einen Spulenkörper (3) gewickelt und bei Bestromung der Erregerspule (2) ein entlang einer Mittenachse (X) axial verschiebbarer Anker (11) angeordnet ist, und mit einem Dichtelement (6), das in Abhängigkeit der Bestromung der Erregerspule (2) gegen die Öffnung eines Ventilsitzes (8) drückt oder diese freigibt, dadurch gekennzeichnet, daß die Öffnung (4) des Ventilsitzes (8) eine Umfangslänge aufweist, die im Vergleich zur Umfangslänge einer kreisförmigen Öffnung mit gleicher Öffnungsquerschnittsfläche vergrößert ist.

2. Magnetventil nach Anspruch 1, dadurch gekennzeichnet, daß die Öffnung (4) kleeblattförmig ausgebildet ist.

3. Magnetventil nach Anspruch 1, dadurch gekennzeichnet, daß die Öffnung (4) rosettenförmig ausgebildet ist.

4. Magnetventil nach einem der Ansprüche 1 bis 3, dadurch gekennzeichnet, daß die Öffnung (4) des Ventilsitzes (8) eine sich entlang der Umfangslänge erstreckende Dichtlippe (22) aufweist, und daß der außerhalb der Dichtlippe (22) liegende Bereich (B) des Ventilsitzes (8) in bezug auf das Dichtelement (6) zurückversetzt angeordnet ist.

5. Magnetventil nach einem der Ansprüche 1 bis 4, dadurch gekennzeichnet, daß der Ventilsitz (8) aus Kunststoff gebildet und einstückig an ein Deckelteil (21) des Magnetventiles angeformt ist.

6. Magnetventil nach einem der Ansprüche 1 bis 4, dadurch gekennzeichnet, daß im Ventilsitz (8) eine die Öffnung enthaltende Düse (9) angeordnet ist.

7. Magnetventil nach Anspruch 6, dadurch gekennzeichnet, daß die Düse (9) in das Deckelteil (8) des Magnetventiles einsetzbar ist.

8. Magnetventil nach Anspruch 6, dadurch gekennzeichnet, daß die Düse (9) im Polkern (13) angeordnet ist.

9. Magnetventil nach Anspruch 6, 7 oder 8, dadurch gekennzeichnet, daß die Düse (9) aus Kunststoff gebildet ist.

10. Magnetventil nach einem der Ansprüche 1 bis 9, dadurch gekennzeichnet, daß das Dichtelement (6) ein plattenförmiges Element mit einer Dichtfläche ist, die orthogonal zur Mittenachse (8) liegt.

11. Magnetventil nach einem der Ansprüche 1 bis 10, dadurch gekennzeichnet, daß das Dichtelement (6) aus Kunststoff besteht.

12. Magnetventil nach einem der Ansprüche 1 bis 11, dadurch gekennzeichnet, daß das Dichtelement (6) von einer Blattfeder (7) geführt wird, daß die Blattfeder (7) zwischen Ventilsitz (8) und Anker (11) angeordnet und an ihren beiden Enden am Gehäuse (1) oder Deckelteil (21) des Magnetventiles fixiert ist, und daß die Blattfeder (7) bei Bestromung der Erregerspule (2) der Ankerbewegung zum Freigeben oder Schließen der Öffnung (4) des Ventilsitzes (8) oder der Düse (9) folgt.
